# EUROPEAN PATENT APPLICATION

(11) **EP 4 691 862 A1**
(43) Date of publication of application: **11.02.2026**
(21) Application number: 24780831.4
(22) Date of filing: 29.03.2024
(51) Int. Cl.: B60S 1/02, B60J 1/00, B60J 1/17, B60J 1/20, B60S 1/56, H05B 3/20

(54) **GLASS PLATE MODULE**

(30) Priority: 30.03.2023 JP 2023056270; 20.09.2023 JP 2023153904
(71) Applicant: Nippon Sheet Glass Company, Limited, Tokyo 108-6321 (JP)
(72) Inventor: SAKAMOTO, Takumitsu, Tokyo 108-6321 (JP); ASAOKA, Hisashi, Tokyo 108-6321 (JP)
(74) Representative: Denno, Richard Christopher Somer
(86) International application number: PCT/JP2024/013096
(87) International publication number: WO 2024/204736

(57) **Abstract**

The present invention is a glass plate module that is provided so as to be movable up and down in an automobile. The glass plate module is provided with: a glass plate; a heating wire provided in the glass plate outside a test region as defined by JIS R 3212; and a power feed unit that feeds power to the heating wire. When the glass plate is at the uppermost position, a belt line in contact with a belt molding provided in the automobile is defined, and at least a part of the heating wire is disposed along the belt line.

## Description

### Technical Field

The present invention relates to a glass plate module provided so as to be movable up and down in an automobile.

### Background Art

Patent Literature 1 discloses a side glass that is movable up and down and has a heating mechanism. It is disclosed that a heating wire is disposed at a specific place (for example, near a door mirror) in the side glass, and fogging is preferentially eliminated by energizing the heating wire.

### Citation List

### Patent Literature

PTL 1: Japanese Patent Laid-open Publication No. 2017-530894

### Summary of Invention

### Technical Problem

In a door in which a side glass as described above is disposed, a belt molding for preventing water from entering the inside of the door is disposed near an opening in which the side glass is accommodated. The belt molding is positioned near the lower side of the side glass when the side glass is moved up and is at the uppermost portion. Therefore, water that has flown through the glass plate easily accumulates in the belt molding.

Therefore, when an automobile is parked in the winter season, the water accumulated in the belt molding is frozen, and the belt molding and the glass plate may be fixed to each other. As a result, a load on moving up and down of the glass plate increases, and there is a possibility that the glass window cannot be opened. The present invention has been made to solve this problem, and an object of the present invention is to provide a glass plate module capable of solving freezing of a belt molding.

### Solution to Problem

Item 1. A glass plate module provided so as to be movable up and down in an automobile, the glass plate module including:
a glass plate;
a heating wire provided outside a region of a test region D defined by JIS R 3212 in the glass plate; and
a power feed unit that is provided on the glass plate and feeds power to the heating wire,
wherein a belt line in contact with a belt molding provided in the automobile is defined when the glass plate is at an uppermost position, and
at least a part of the heating wire is disposed along the belt line.

Item 2. The glass plate module according to item 1, wherein at least a part of the heating wire is disposed below the belt line.

Item 3. The glass plate module according to item 1, wherein at least a part of the heating wire is disposed on the belt line.

Item 4. The glass plate module according to any one of items 1 to 3, wherein the heating wire is provided at a position invisible from an outside.

Item 5. The glass plate module according to any one of items 1 to 4, wherein the heating wire includes a side portion extending along at least one side of both sides of the glass plate.

Item 6. The glass plate module according to any one of items 1 to 5, wherein the heating wire includes a portion extending along both sides and an upper side of the glass plate.

Item 7. The glass plate module according to any one of items 1 to 6, wherein
the heating wire includes:
an upper portion along the belt line;
a lower portion disposed below the upper portion; and
a pair of connecting portions that connect both ends of the lower portion and the upper portion to each other.

Item 8. The glass plate module according to item 7, wherein
the lower portion includes a first portion and a second portion arranged with a gap, and
the power feed unit is provided at each of ends of the first portion and the second portion facing each other with the gap.

Item 9. The glass plate module according to item 7 or 8, wherein a width of the upper portion is larger than a width of the lower portion.

Item 10. The glass plate module according to any one of items 1 to 9, wherein
the belt line is defined to extend obliquely upward as going rearward with respect to a horizontal direction, and
the power feed unit is disposed at a rear lower corner of the glass plate.

Item 11. The glass plate module according to any one of items 1 to 10, wherein the heating wire is formed of silver printing.

Item 12. The glass plate module according to any one of items 1 to 11, wherein
the glass plate is formed of laminated glass including an inner glass plate and an outer glass plate, and
the heating wire is disposed between the inner glass plate and the outer glass plate.

Item 13. The glass plate module according to item 12, wherein the heating wire is disposed on a surface on a vehicle interior side of the outer glass plate.

Item 14. The glass plate module according to any one of items 1 to 13, wherein the glass plate is formed of a curved single plate.

Item 15. The glass plate module according to any one of items 1 to 14, wherein the heating wire is coated with a coating material.

### Advantageous Effects of Invention

According to the present invention, freezing of a belt molding can be solved.

### Brief Description of Drawings

[Fig. 1] Fig. 1 is a partial cross-sectional view of a door to which a glass plate module according to an embodiment of the present invention is attached.
[Fig. 2] Fig. 2 is a front view of an embodiment of the glass plate module according to the present invention.
[Fig. 3] Fig. 3 is a front view illustrating another example of the glass plate module according to the present invention.
[Fig. 4] Fig. 4 is a front view illustrating another example of the glass plate module according to the present invention.
[Fig. 5] Fig. 5 is a front view illustrating another example of the glass plate module according to the present invention.
[Fig. 6] Fig. 6 is a front view illustrating another example of the glass plate module according to the present invention.
[Fig. 7] Fig. 7 is a front view illustrating another example of the glass plate module according to the present invention.
[Fig. 8] Fig. 8 is a front view illustrating another example of the glass plate module according to the present invention.

### Description of Embodiments

Hereinafter, an embodiment of a glass plate module according to the present invention will be described with reference to the drawings. A glass plate module according to the present embodiment is provided so as to be movable up and down in a door of an automobile. Hereinafter, first, a part of the structure of a door provided with the glass plate module will be described, and then the glass plate module will be described.

### <1. Door structure>

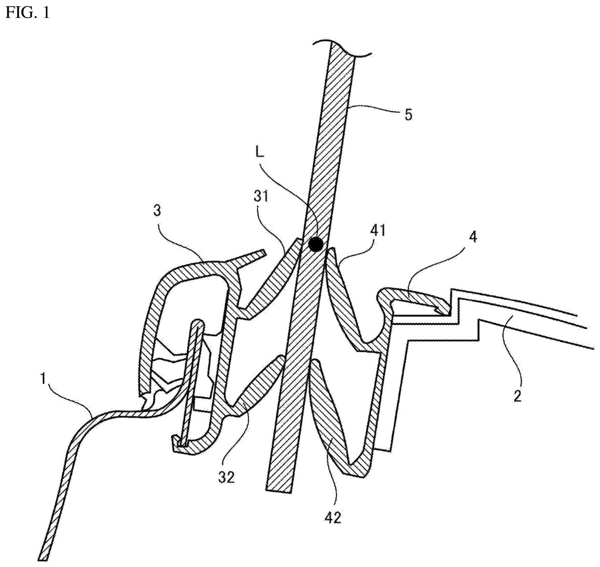

Fig. 1 is a partial cross-sectional view of a door structure to which a glass plate module according to the present embodiment is attached. As illustrated in Fig. 1, the door structure includes a vehicle exterior door frame 1 and a vehicle interior door frame 2. A vehicle exterior belt molding 3 is attached to the vehicle exterior door frame 1, and a vehicle interior belt molding 4 is attached to the vehicle interior door frame 2. Then, between the belt moldings 3 and 4, a glass plate module 5 is supported so as to be movable up and down by a regulator (not illustrated).

In the vehicle exterior belt molding 3, an upper lip 31 and a lower lip 32 that are elastically deformable are attached to a surface facing the vehicle interior side. The upper lip 31 extends obliquely upward so as to be in contact with the glass plate module 5, and extends in a direction perpendicular to the sheet surface of Fig. 1. The lower lip 32 is attached to the lower side of the upper lip 31 and is formed in the same manner as the upper lip 31.

In the vehicle interior belt molding 4, an upper lip 41 and a lower lip 42 that are elastically deformable are attached to a surface facing the vehicle exterior side. The upper lip 41 extends obliquely upward so as to be in contact with the glass plate module 5, and extends in a direction perpendicular to the sheet surface of Fig. 1. The lower lip 32 is attached to the lower side of the upper lip 31 and is formed in the same manner as the upper lip 31.

The lips 31, 32, 41, and 42 as described above prevent moisture such as rain from entering the inside of the door along the glass plate module 5. Note that an imaginary line that connects portions with which the upper lips 31 and 41 are in contact, when the glass plate module 5 is moved up by the regulator and is at the uppermost position, is referred to as a belt line L.

### <2. Glass plate module>

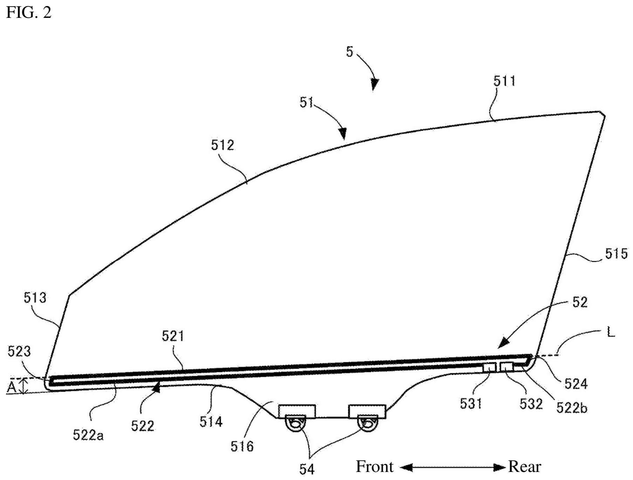

Fig. 2 is a front view of the glass plate module. As illustrated in Fig. 2, the glass plate module 5 includes a glass plate 51, a heating wire 52 provided on a surface of the glass plate 51 on the vehicle interior side, and a pair of power feed units 531 and 532 for feeding power to the heating wire 52.

### <2-1. Glass plate>

The glass plate 51 is surrounded by a first upper side 511, a second upper side 512, a front side 513, a bottom side 514, and a rear side 515. The bottom side 11 extends in the front-rear direction, and is provided with a protrusion 516 protruding downward near the center in the front-rear direction. To the protrusion 516, a pair of fixtures 54 for connecting to a regulator (not illustrated) is attached. The bottom side 11 extends slightly obliquely upward toward the rear, and the front side 513 and the rear side 515 extend upward from the front end and the rear end, respectively. The front side 513 and the rear side 515 are substantially parallel, and each extend so as to be inclined backward as going upward. The length of the front side 513 is shorter than that of the rear side 515. The first upper side 511 is connected to the upper end of the rear side 515, and the first upper side 511 extends substantially parallel to the bottom side 514. The front end of the first upper side 511 and the upper end of the front side 513 are connected by the second upper side 512.

The above-described belt line L is defined at the lower end of the glass plate 51. The belt line L extends substantially parallel to the bottom side 514. The heating wire 52 and the power feed units 531 and 532 are arranged in a region A between the belt line L and the bottom side 514. From the viewpoint of weight reduction of the glass plate, the vertical width of the region A is preferably, for example, 20 to 40 mm.

The glass plate 51 can also be formed of heat ray absorbing glass, general clear glass, or green glass. Such a glass plate 51 needs to realize visible light transmittance conforming to a safety standard of the country in which an automobile is used.

The glass plate 51 used here may be flat or curved. However, in the case of being curved, the surface on the vehicle interior side is formed in a concave shape.

### <2-2. Heating wire and power feed unit>

As illustrated in Fig. 1, the heating wire 52 includes an upper portion 521 extending along the belt line L, a lower portion 522 disposed below the upper portion 521 and extending in parallel with the upper portion 521, and a first connecting portion 523 and a second connecting portion 524 that connect front ends and rear ends of the upper portion 521 and the lower portion 522, respectively. In the lower portion 522, a first portion 522a disposed on the front side and a second portion 522b disposed on the rear side are disposed with a gap therebetween. This gap is provided in the vicinity of a corner where the bottom side 514 and the rear side 515 intersect. A first power feed unit 531 is provided at the rear end of the first portion 522a, and a second power feed unit 532 is provided at the front end of the second portion 522b. A positive electrode and a negative electrode of a power supply (not illustrated) are respectively connected to the first power feed unit 531 and the second power feed unit 532 via cables (not illustrated). Therefore, the heating wire 52 and the power supply constitute a series circuit.

In addition, the wire width of the upper portion 521 is larger than the wire width of the lower portion 522, whereby the amount of heat generation by the lower portion 522 is larger than the amount of heat generation by the upper portion 521.

When the glass plate module 5 is moved up and down, the number of times the heating wire of the upper portion 521 reciprocates between the belt moldings 3 and 4 is larger than the number of times the heating wire of the lower portion 522 reciprocates between the belt moldings 3 and 4. Therefore, the upper portion 521 is more easily affected by wear than the lower portion 522. Therefore, by increasing the wire width of the upper portion 521, the influence of disconnection or the like due to wear can be reduced.

The material constituting the heating wire 52 is not particularly limited, but for example, can be formed by printing a conductive material such as silver or copper. Alternatively, a metal wire as a heating wire can be bonded to the glass plate 51. The material of the metal wire can also be silver, copper, or the like as in printing.

### <3. De-icing by glass plate module>

Moisture such as rain adhering to the glass plate 51 flows through the glass plate 51 and accumulates in the belt moldings 3 and 4, and thus may be frozen in the wintertime. When the belt moldings 3 and 4 are frozen, the glass plate 51 and the belt moldings 3 and 4 are fixed, and it is difficult to be moved up and down. In addition, even if it is not completely frozen, the load on the regulator increases during moving up and down. On the other hand, in the glass plate module 5 of the present embodiment, since the heating wire 52 is provided along the belt line L, the lips 31 and 41 of the belt moldings 3 and 4 can be heated by energizing the heating wire, and the frozen belt moldings 3 and 4 can be de-iced. As a result, it is possible to solve the problem that the glass plate module 5 is unable to be moved up and down.

Since the heating wire 52 has the upper portion 521 and the lower portion 522 arranged vertically, the entire lips 31 and 41 of the belt moldings 3 and 4 can be heated. In particular, since the width of the upper portion 521 is wide, the amount of heat generation by the upper portion 521 can be increased. Therefore, it is possible to strongly heat the upper lips 31 and 41 in which water is likely to be accumulated, and it is possible to effectively de-ice.

In the present embodiment, in order to prevent the belt moldings 3 and 4 from freezing, the heating wire 52 is provided on the glass plate 51 but no heating wire is provided on the belt moldings 3 and 4, the reasons thereof being provided below.
(1) Since the belt moldings 3 and 4 are deformed by receiving a force when the glass plate module 5 is moved up and down, the heating wire is easily disconnected.
(2) While the thermal conductivity of the glass plate is 1 W/(mK), the thermal conductivity of the rubber used for the belt moldings 3 and 4 is 0.13 to 0.25 W/(mK), and the thermal conductivity of the glass plate is higher than that of the rubber. Therefore, heat can be more effectively used when the heating wire is provided on the glass plate 51.
(3) Regarding the specific heat of the rubber and the glass plate, the specific heat of the rubber is 1400 to 1900 J/(kgK), whereas the specific heat of the glass plate is 677 J/(kgK), so that the temperature can be increased with a small amount of heat. Therefore, providing a heating wire on the glass plate is effective for de-icing.

In the present embodiment, due to design requirements, the belt moldings 3 and 4 extend so as to be inclined upward as going backward, but as a result, the water flowing through the glass plate 51 tends to accumulate at one place in front of the belt moldings 3 and 4. Therefore, in the present embodiment, the power feed units 531 and 532 are provided near the rear corner of the glass plate 51. This makes it difficult for the power feed units 531 and 532 to come into contact with water, and the risk of electric leakage can be reduced.

### <4. Modifications>

Although one embodiment of the present invention has been described above, the present invention is not limited to the above embodiment, and various modifications can be made without departing from the gist thereof. Note that the following modifications can be appropriately combined. In addition, the following modifications can be appropriately combined with the above-described embodiment.

<4-1>
The position of the heating wire 52 is not particularly limited as long as it is provided in a region other than the test region D of JIS R 3212, but at least a part thereof is preferably disposed below the belt line L. As a result, since the heating wire 52 is shielded by the belt moldings 3 and 4 and the lips 31, 32, 41, and 42, it is not visually recognized from the outside, and the appearance is improved. In addition, a part of the heating wire 52 (for example, the upper portion 521) may not be completely on the belt line L, and may be disposed slightly above or slightly below the belt line L.

<4-2>
The shape of the heating wire 52 is not particularly limited, and various modes are possible. For example, the heating wire may be a heating wire in which three or more linear portions along the belt line are arranged. Alternatively, one linear heating wire along the belt line can be used. In this case, the power feed units 531 and 532 can be provided at both ends of the heating wire. In addition, the heating wire 52 can be provided on at least one of a surface on the vehicle outer side and a surface on the vehicle inner side of the glass plate 51.

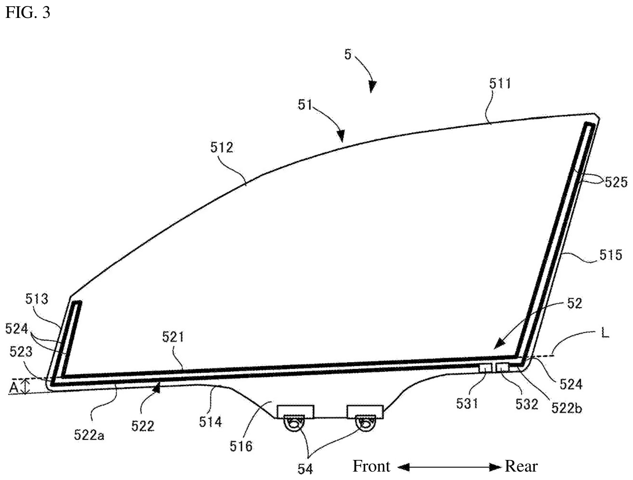

The heating wire 52 can also be provided along a side of the glass plate 51. For example, as illustrated in Fig. 3, the upper portion 521 and the lower portion 522 of the heating wire 52 can be extended to provide a first side portion 524 and a second side portion 525 along the front side 513 and the rear side 515, respectively. Only one of the first side portion 524 and the second side portion 525 may be provided.

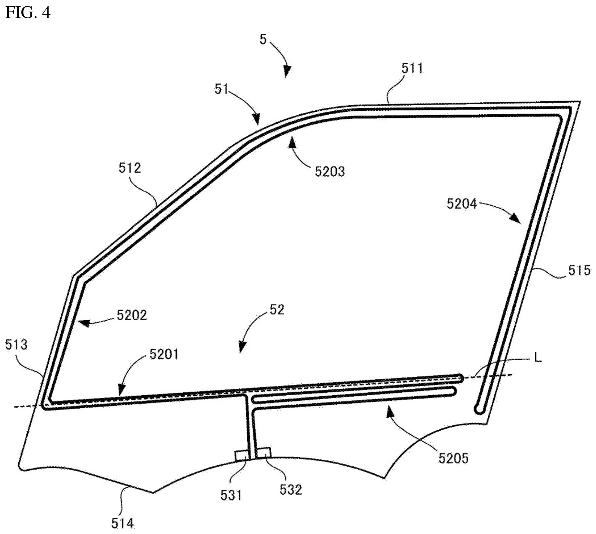

In addition, as illustrated in Figs. 4 to 7, the heating wire 52 may be configured to extend along the front side 513, the upper sides 511 and 512, and the rear side 515.

In the example of Fig. 4, the heating wire 52 extending in series from the power feed units 531 and 532 includes a first portion 5201 along the belt line L (on the belt line L), a second portion 5202 along the front side 513, a third portion 5203 along the upper sides 511 and 512, a fourth portion 5204 along the rear side 513, and a fifth portion 5205 below the first portion 5201 and along the belt line L. More specifically, the heating wire 52 extending upward from the first power feed unit 531 extends to the front side 513 along the belt line L, extends to the vicinity of the lower end of the rear side 515 along the front side 513, the upper sides 511 and 512, and the rear side 515, then turns inward, and extends along the rear side 515, the upper sides 511 and 512, and the front side 513. Further, the heating wire 52 extends to the vicinity of the rear side 513 along the belt line L, is then folded back to the vicinity of the center of the belt line L, extends again to the vicinity of the rear side 513, is then folded back to the vicinity of the center of the belt line L, extends downward, and is connected to the second power feed unit 532.

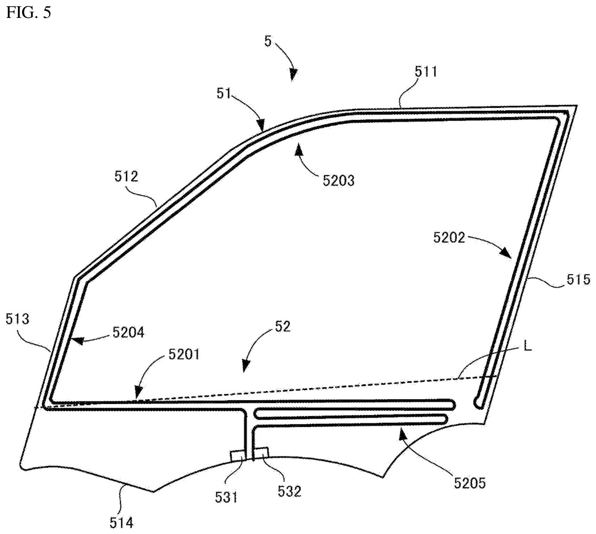

In the example of Fig. 5, unlike Fig. 4, the first portion 5201 of the heating wire 52 does not extend parallel to the belt line L, but extends obliquely downward from the vicinity of the front end of the belt line L. In addition, since the fifth portion 5205 also extends parallel to the first portion 5201, it is not parallel to the belt line L. Therefore, in the example of Fig. 5, a part of the heating wire 52 is on the belt line L.

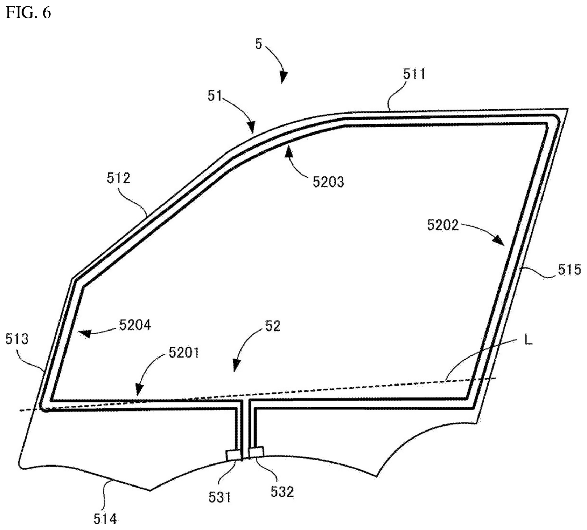

In the example of Fig. 6, two heating wires 52 are connected in parallel to both power feed units 531 and 532. More specifically, the heating wire 52 extending upward from the first power feed unit 531 extends to the front side 513 along the belt line L, extends to the vicinity of the lower end of the rear side 515 along the front side 513, the upper sides 511 and 512, and the rear side 515, then extends forward along the belt line L, extends downward from the vicinity of the center of the belt line L, and is connected to the second power feed unit 532. Two such heating wires 52 are provided and extend in parallel. Also in this example, the first portion 5201 does not extend in parallel with the belt line L. However, the first portion 5201 may extend in parallel with the belt line L.

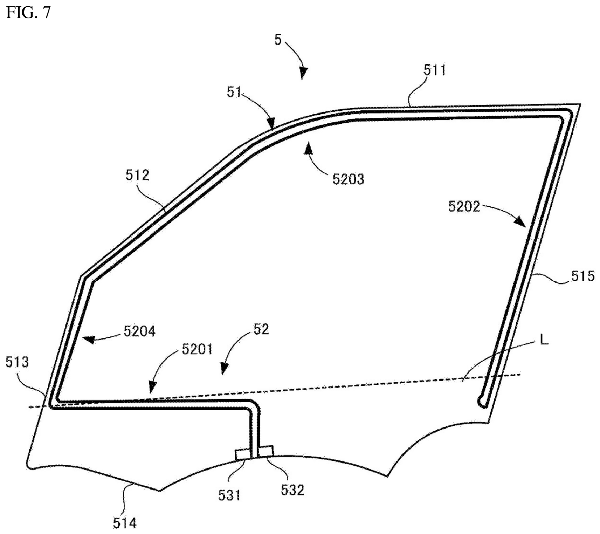

In the example of Fig. 7, the heating wire 52 extends in series. The heating wire 52 extending upward from the first power feed unit 531 extends to the front side 513 along the belt line L, extends to the vicinity of the lower end of the rear side 515 along the front side 513, the upper sides 511 and 512, and the rear side 515, then is folded inward, and extends along the rear side 515, the upper sides 511 and 512, and the front side 513. Further, the heating wire 52 extends to the vicinity of the center of the belt line L, then extends downward, and is connected to the second power feed unit 532. In this example, the first portion 5201 does not extend over the entire length of the belt line, but extends over a part (front portion in this example) of the belt line L.

As described above, the heating wire 52 can be formed along the front side 513, the upper sides 511 and 512, and the rear side 515, but can be formed in various modes as described above. Further, as illustrated in Fig. 4, in addition to the portions along the front side 513, the upper sides 511 and 512, the rear side 515, and the belt line L, an additional portion such as the fifth portion 5205 can be provided. The shape of such an additional portion is not particularly limited. Since the upper sides 511 and 512 and both sides 513 and 515 of the glass plate 51 are accommodated in the door frame, the heating wire 52 along them can de-ice the molding in the door frame.

It is only necessary that a part of the heating wire 52 extends along the belt line L. "Along the belt line L" means that a part of the heating wire 52 is disposed on the belt line L, crosses the belt line L, or does not exist on the belt line L but extends in parallel or obliquely in the vicinity of the belt line L. The "vicinity of the belt line L" may be any distance as long as ice in the belt line L can be melted by the heating wire 52, and for example, the distance between the heating wire 52 and the belt line L is preferably 0 to 30 mm and more preferably 2 to 10 mm. As illustrated in Fig. 7, the heating wire may not extend over the entire length of the belt line L, and may extend along a part of the belt line. As described above, the position of the heating wire 52 is not particularly limited, but when the heating wire is disposed at a position parallel to the belt line L and on or close to the belt line L, effective de-icing is possible.

The width of heating wire 52 is also not particularly limited. For example, the wire width of the upper portion 521 can be made smaller than the wire width of the lower portion 522. For example, when the temperature gradient is large in the edge peripheral portion of the glass plate 51, thermal stress is generated in the edge portion, so that thermal cracking is likely to occur. Therefore, by making the amount of heat generation in the lower portion 522 smaller than the amount of heat generation of the upper portion 521, the temperature can be increased as the distance from the edge increases. As a result, since the temperature gradient around the edge can be reduced, thermal cracking can be easily suppressed. In addition, all of the heating wires can have the same width, or as described above, portions having different widths can be combined according to the required amount of heat generation.

The heating wire 52 can be disposed on both the surface on the vehicle interior side and the surface on the vehicle exterior side of the glass plate 51.

<4-3>
The surface of the heating wire 52 can be coated with a coating material for securing abrasion resistance and insulation. As a coating material, for example, an organic-inorganic composite film containing silica as a main component, a fluororesin layer, a ceramic layer, or the like can be used. As the organic-inorganic composite film, for example, a known composite film as described in Japanese Patent No. 4451440 can be adopted. As the ceramic layer, for example, a known coating material as described in Japanese Patent Application No. 2015-27017 can be adopted.

The coating material can be provided not only on the surface of the heating wire 52 but also on the entire glass plate 51. As a result, a step between the glass plate 51 and the heating wire 52 can be reduced, and catching by the heating wire 52 can be reduced. In this case, by increasing the thickness of the coating material from the upper end side to the lower end side of the glass plate 51, the durability of the heating wire disposed on the lower portion of the glass plate 51 can be improved.

Furthermore, a coating material having water repellency can be provided. In this way, when dew condensation or freezing occurs on the vehicle interior surface, freezing can be suppressed by converting dew condensation water into water droplets. In addition, since the surface adhesion force between the coating material and the water droplet is reduced, the water droplet or the frozen water droplet is easily separated with a small force.

<4-4>
The shape of the glass plate 51 is not particularly limited, and the shape illustrated in Fig. 2 is an example. In addition, the glass plate 51 can have various configurations, and can be made of not only one glass plate but also laminated glass. In this case, for example, the outer glass plate, the inner glass plate, and a resin interlayer film disposed between these glass plates can constitute laminated glass. The interlayer film may be formed of one layer or may be formed of a plurality of layers. In the case of forming with a plurality of layers, for example, a structure in which a resin layer having low rigidity is sandwiched between resin layers having high rigidity can be adopted.

When such laminated glass is used, the heating wire 52 and the power feed unit 53 can be disposed between the outer glass plate and the inner glass plate. For example, the heating wire 52 and the power feed unit 53 can be disposed between the interlayer film and any one of the glass plates or, when the interlayer film is formed of a plurality of resin layers, between these resin layers. In addition, for example, if a notch is formed in one glass plate to expose the power feed unit 53, it can be connected to the power supply. Alternatively, the power feed unit 53 can be disposed outside the laminated glass. In this case, the heating wire 52 is preferably formed of a metal wire, although it can be formed by printing. In addition, a bus bar that connects the heating wire 52 and the power feed units 531 and 532 can also be provided. The bus bar can be formed of, for example, two metal foils (for example, copper foil), and the heating wire 52 can be disposed between the metal foils and fixed by solder.

As described above, by disposing the heating wire 52 inside the laminated glass, the heating wire 52 is protected, and deterioration can be suppressed.

<4-5>
The positions of the power feed units 531 and 532 are not particularly limited, and the power feed units can be disposed at positions other than those in the above embodiment.

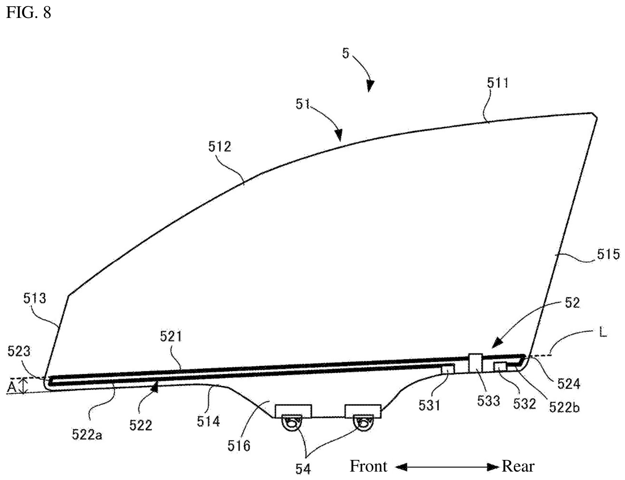

In the above embodiment, the heating wire 52 is configured of a series circuit, but may be configured of a parallel circuit. For example, as illustrated in Fig. 8, a third power feed unit 533 connected to the upper portion 521 is provided between the first power feed unit 531 and the second power feed unit 532. A power supply of the same polarity is connected to the first power feed unit 531 and the second power feed unit 532 via a cable, and a power supply of the different polarity from that of the first and second power feed units 531 and 532 is connected to the third power feed unit 533 via a cable. As a result, a circuit including the first power feed unit 531 and the third power feed unit 533 and a circuit including the second power feed unit 532 and the third power feed unit 533 are formed. That is, a parallel circuit is formed. By forming such a parallel circuit, the length of the heating wire 52 is shortened, so that the amount of heat generation can be increased and the ice can be melted in a short period of time.

As illustrated in Fig. 8, when the power feed units 531 to 533 are disposed at the midpoint of the lower side 514 or on the rear side of the midpoint, the power feed units 531 to 533 hardly come into contact with water, and the risk of electric leakage can be reduced. On the other hand, when the power feed units 531 to 533 are disposed on the front side of the midpoint of the lower side 514, the length of the front circuit is shortened, and the amount of heat generation on the front side where water is likely to be accumulated can be increased. Note that such a parallel circuit can also be applied to the circuits of Figs. 3 to 5 and 7.

The position in an automobile where the glass plate module of the present invention is provided is not particularly limited. Therefore, it may be provided to other than the door of an automobile, and can be provided as long as it is configured to be movable up and down and provided with a belt molding. The door structure illustrated in Fig. 1 is also an example, and the forms of the belt moldings 3 and 4 are not particularly limited. That is, at least a part of the belt molding may be in contact with the glass plate so as to prevent water from entering.

### Reference Signs List

3 Belt molding
31 Upper lip
32 Lower lip
4 Belt molding
41 Upper lip
42 Lower lip
5 Glass plate module
51 Glass plate
52 Heating wire
521 Upper portion
522 Lower portion
523 Connecting portion
524 First side portion
525 Second side portion
531, 532 Power feed unit

## Claims

1. A glass plate module provided so as to be movable up and down in an automobile, the glass plate module comprising:
a glass plate;
a heating wire provided outside a region of a test region D defined by JIS R 3212 in the glass plate; and
a power feed unit that is provided on the glass plate and feeds power to the heating wire,
wherein a belt line in contact with a belt molding provided in the automobile is defined when the glass plate is at an uppermost position, and
at least a part of the heating wire is disposed along the belt line.

2. The glass plate module according to claim 1, wherein at least a part of the heating wire is disposed below the belt line.

3. The glass plate module according to claim 1, wherein at least a part of the heating wire is disposed on the belt line.

4. The glass plate module according to claim 1, wherein the heating wire is provided at a position invisible from an outside.

5. The glass plate module according to claim 1, wherein the heating wire includes a side portion extending along at least one side of both sides of the glass plate.

6. The glass plate module according to claim 1, wherein
the heating wire includes:
an upper portion along the belt line;
a lower portion disposed below the upper portion; and
a pair of connecting portions that connect both ends of the lower portion and the upper portion to each other.

7. The glass plate module according to claim 6, wherein
the lower portion includes a first portion and a second portion arranged with a gap, and
the power feed unit is provided at each of ends of the first portion and the second portion facing each other with the gap.

8. The glass plate module according to claim 6 or 7, wherein a width of the upper portion is larger than a width of the lower portion.

9. The glass plate module according to claim 1, wherein
the belt line is defined to extend obliquely upward as going rearward with respect to a horizontal direction, and
the power feed unit is disposed at a rear lower corner of the glass plate.

10. The glass plate module according to claim 1, wherein the heating wire is formed of silver printing.

11. The glass plate module according to claim 1, wherein
the glass plate is formed of laminated glass including an inner glass plate and an outer glass plate, and
the heating wire is disposed between the inner glass plate and the outer glass plate.

12. The glass plate module according to claim 11, wherein the heating wire is disposed on a surface on a vehicle interior side of the outer glass plate.

13. The glass plate module according to claim 1, wherein the glass plate is formed of a curved single plate.

14. The glass plate module according to claim 1, wherein the heating wire is coated with a coating material.
